Europäisches Patentamt

European Patent Office

Office européen des brevets

(11) Publication number: **0 351 922**
**A1**

## (12) EUROPEAN PATENT APPLICATION

(21) Application number: **89201894.6**

(22) Date of filing: **18.07.89**

(51) Int. Cl.4: **A01C 3/02** , **C02F 1/58** , **C05F 3/00**

(30) Priority: **19.07.88 NL 8801827**

(43) Date of publication of application:
**24.01.90 Bulletin 90/04**

(84) Designated Contracting States:
**BE DE FR GB IT NL**

(71) Applicant: **DRESE, Jan Theo**
**1-9 De Bloemert**
**NL-9475 TG Midlaren(NL)**

(72) Inventor: **DRESE, Jan Theo**
**1-9 De Bloemert**
**NL-9475 TG Midlaren(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) **A process and an apparatus for treatment of manure, in particular liquid manure.**

(57) A process and an apparatus for continuous removal of ammonia and phosphate from liquid manure by a stripping process. The remaining watery fraction from which the ammonia and phosphates are removed is filtered by a plot of land that acts as a filter for, mainly, the remaining organic material.

The ammonia and phosphates are recovered and can be sold as a fertiliser.

The apparatus comprises a stripper/absorber (4) to which the manure can be supplied and where, with the addition of lime (5), ammonia and phosphate can be removed from the manure, the stripper/absorber containing a first contacting unit, for bringing the liquid manure into contact with a flow of warm air to strip carbondioxide and part of the ammonium from the manure.

FIG 1

## A process and an apparatus for treatment of manure, in particular liquid manure.

The invention concerns a process to treat manure, especially liquid manure.

The processing of manure from the livestock industry is a big problem already for a number of years. The quantities of produced manure are too great to be used as usually as a fertiliser for the farmland near the livestock farms. There is therefore a need for a method to process the excess manure relatively economically and without harm to the environment.

The object of the invention is to fulfil this need.

This object is achieved according to the invention by stripping the manure from ammonia and phosphates and filtering the remaining watery fraction by a plot of land in order to remove the organic material from the watery fraction.

In the following the invention will be further described, referring to the drawings.

Fig. 1 illustrates in a diagram a process according to the invention.

Fig. 2 shows, in a diagram, a stripper/absorber suitable for the application of the process.

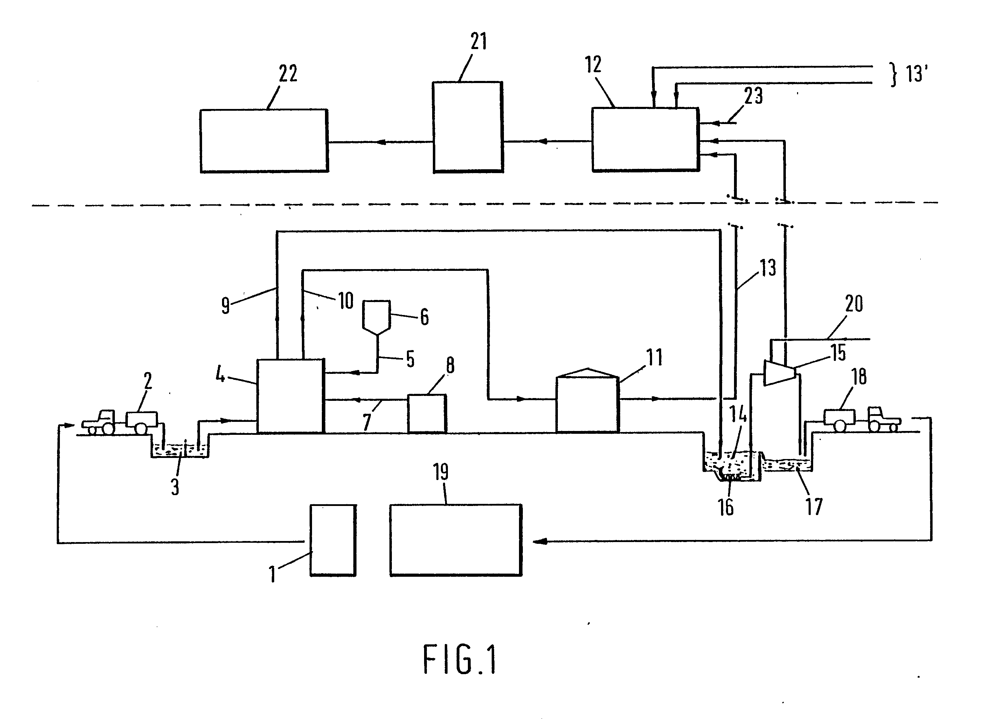

Referring to Fig. 1 the manure of a number of manure producing farms, for example pig-farms, indicated at 1, is transported with tank cars to a receiving basin 3. The manure from basin 3 is transported to a stripper/absorber 4, where the phosphate and the ammonia are removed from the manure. A suitable stripper/absorber will be described furtheron. It is noted, that lime 5 is added from lime silo 6 to stripper/absorber 4, and an acid, for example sulphuric acid, 7, is added from a tank 8.

The stripper/absorber has a first outlet 9 for water and the accompanying lime compounds, and a second outlet 10, for ammonia in the form of an ammonia salt solution. The ammonia solution is, in this example, transported to a temporary storage 11, and can be transported from the storage 11 to a dryer 12 as is indicated in a diagram through line 13.

The dryer 12 is preferably one common dryer for a number of stripper/absorbers. The transport between the storage 11 and the dryer can be by pipeline, road-rail or waterway transport.

The water, and the lime compounds from the stripper/absorber are transported to a settler 14. The sediments will preferably be transported to a settler 15 for further concentration.

For this purpose the settler can be equiped with a pump or a transport screw 16. The liquid from the settler is, according to this example, transported to a basin 17, that also serves as an overflow basin for the settler 14. It has to be noted, that in the stripper/absorber also a concentration step can take place, as will be explained later. The content of the basin 17 consists of a watery fraction without ammonia and phosphate.

For environmental reasons this watery fraction cannot be discharged on open water. The fraction contains namely, among other components, too much organic material. The removal of the organic material by means of existing equipment is relatively expensive and time consuming.

According to the invention, the watery fraction containing only very small amounts of ammonia and phosphates is tripped from its organic material with the aid of a plot of land.

For this purpose the watery fraction can be sprayed over a patch of land, or can be infiltrated, using drain pipes. The last mentioned technique makes it possible to process the watery fraction also during frost periods. In both cases, the land functions as a very large and low cost filter for organic material.

The watery fraction can also be carried away by the manure producers for example in a tank car 18, and be distributed over land 19.

Also distribution of the watery fraction over the land close to the stripper/absorber is possible.

To the settler a poly-electrolite can be added, as is indicated by 20, to improve the separation process.

The concentrated lime sludge from separator 15 can be transported to dryer 12. The dried lime sludge and the dried ammonia salt can be bagged as is indicated by 21, and be stored in storage house 22 for further sale.

In the diagram a natural gas pipe line 23 to the dryer is shown. Furthermore, at 13' is indicated that the dryer can also handle other material than that from the stripper/absorber.

When, as indicated, a stripper/absorber with separators operates for, for example, 10 manure producers, the bulk of the transport only covers short distances, only the much reduced quantities of lime sludge and ammonia salt solution have to be transported over larger distances. By doing so, the required road traffic is reduced.

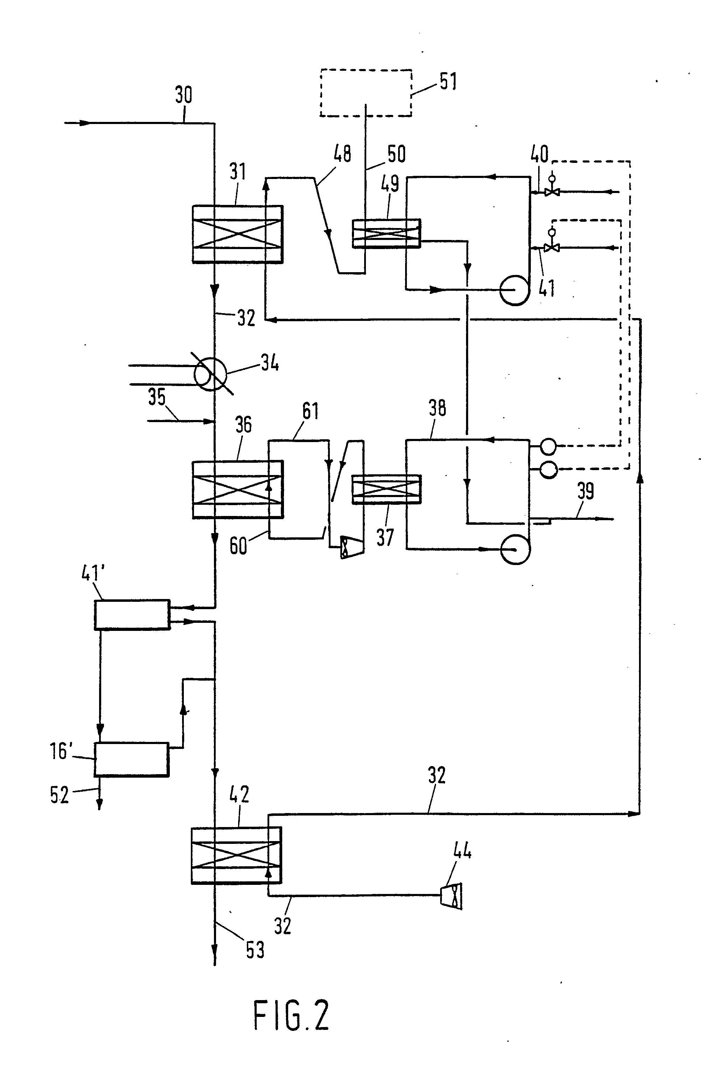

A suitable stripper/absorber can be constructed in various ways. It is possible to strip ammonia from manure by steam stripping or by conventional air stripping. Also a new air stripping process can be used that does not require an acid. The ammonia is then recovered as a concentrated solution in water, instead of as an ammonium salt. The latter process is described in the applicants' Dutch patent application 8400686. Furthermore the so-called nitrification process can be used. In the following an improved stripper/absorber is described with reference to Fig. 2.

Liquid manure 30, stripped of solid material, is brought into contact with a warm, satured airflow 32 in packed column 31. Hereby a part of the ammonia will be stripped from the liquid manure.

In order to make stripping of all of the ammonia possible the pH of the liquid manure should be increased to 10-11. This can be achieved by adding lime, slaked lime, dolomite or lye, to the manure. The lime reacts also with the phosphate to from calcium phosphate. Liquid manure contains much carbon dioxide, and a large part of it will be stripped from the manure by an airflow 32. As carbondioxide reacts with lime, the stripping of carbondioxide in column 31 results in an about 40% lower lime consumption when the pH has to be brought to 10-11. This leads to a significant saving as compared with the conventional air stripping process where all the carbondioxide has to be bound to the lime.

The liquid flow 33 from packed column 31 is increased in temperature by a heater 34, too, for example 65°C, after which, at 35, lime, unslaked lime, or dolomite is added to increase the pH. Next, in a packed column 36, the liquid flow is brought into contact with a second recirculating airflow 60. Hereby the remaining ammonia is stripped from the liquid.

The airflow 61 from the column 36 is, in a column 37 brought into contact with a water flow 38 in which an acid is dissolved. The acid reacts with the ammonia to form an ammonium salt. The produced salt is removed as a solution at 39. At 40 acid is added and at 41 water. The control of the flows 39, 40 and 41 takes place by, respectively a level, pH and specific gravity control. The hot liquid flow from column 36 is brought into contact in a packed column 42 with the airflow 32, whereby heat is transferred from the liquid flow to the airflow. A water flow 53 from column 42 contains lime compounds and organic material. The lime compounds and part of the organic material are separated in the separator 14 (Fig.1).

The separator can be a sewage farm, a decanter or an other known device.

In case the pollution of the packed columns and pipes, due to the lime compounds, is too severe, a settler 14 and if necessary a decanter 16 can be installed in the liquid flow to column 42, or even before column 36.

The liquid from the separators can be returned to the main stream as is indicated in Fig. 2.

The use of a sewage farm is then, however, not possible.

The lime sludge from 14 and 16 is indicated by 52.

The watery fraction from the packed heat transfer column 42 is indicated by 53.

The airflow 32 is brought, in the packed column 42, in direct contact with the warm liquid flow and is thereby heated and saturated with water vapor.

The outflowing warm airflow 32 goes to the packed column 31 where, as explained earlier, the liquid flow 1 is heated by direct contact with the airflow 32.

The heating takes place mainly by condensation of water vapor from the airflow into the water flow.

The outflowing airflow 48 contains ammonia, carbondioxide, water vapor and foul smelling components from the manure and can, for environmental reasons, not be discharged to the atmosphere, without further treatment. The airflow 48 is therefore first transport ed to an absorber 49 where in a similar way as in the column 37 ammonia and an acid are bound forming an ammonium salt.

The airflow 50 from column 49 does not contain ammonia, but will still contain the foul smelling components that can be removed for example in a biofilter 51.

As is known, a biofilter is not very suitable for breaking down ammonia, and for that reason the biofilter is preceded by the column 49.

An advantage of an open airflow 32, 48, 50 and a closed air circulation 60, 61 is, that the carbon dioxide can be removed with the open airflow, resulting in a substantially lower lime consumption. Moreover the amount of air in the open circuit can be chosen for maximum heat transfer in the columns 42 and 31. From the enthalphy diagram of water saturated air can be calculated what the optimum airflow will be to exchange the maximum amount of heat between one water flow to another by direct contact with an airflow between two packed columns.

In contrast from what is often believed, the optimum airflow for heat transfer is much smaller than the optimum airflow for stripping of ammonia from the same water flow.

The closed airflow can be designed for maximum stripping efficiency. The stripping efficiency increases at a higher temperature of the columns 36, and of a larger airflow 60. The airflow 60 is about 2 to 4 times the airflow 32.

There where a packed column is mentioned as a means of contact, also another suitable device such as bubble caps can be used.

The described stripper/absorber is particularly efficient because the stripping takes place at a high temperature.

Furthermore most of the added heat is recuperated, because of the high temperature pathogenic germs and seeds will be killed so that the watery effluent can be infiltrated, or sprayed on land without risks of diseases.

Furthermore the lime consumption for the stripping process is greatly reduced because most of the carbondioxide is removed before the lime is added as is noted before, also other methods to remove ammonia and phosphates can be used.

It has to be noted that after the preceding, various modifications are obvious for an expert. Such modifications are supposed to be in accordance with the invention.

**Claims**

1. A process for treatment of manure in particular liquid manure, characterized in that the manure is stripped from ammonia and phosphates and the remaining watery fraction is filtered by a plot of land in order to remove the organic material from the watery fraction.

2. A process according to claim 1, characterized in that the watery fraction is sprayed on a plot of land.

3. A process according to claim 1, characterized in that the watery fraction is infiltrated in a plot of land.

4. A process according to one of the preceding claims, characterized in that the watery fraction, after the removal of at least a part of the ammonia, is subjected to at least one concentration process.

5. A process according to claim 4, characterized in that the watery fraction from the concentration process is added to the main flow for further treatment.

6. A process according to claim 5, characterized in that the remaining ammonia is removed from the watery fraction in a further treatment.

7. A process according to one of the preceding claims, characterized in that a nitrification process is used for the removal of the ammonia.

8. A process according to one of the claims 1-6, characterized in that for the removal of ammonia and phosphate, the manure will be subjected to a stripping process.

9. A process according to claim 8, characterized in that the stripping process is steam stripping.

10. A process according to claim 8, characterized in that the stripping process is an air stripping process.

11. A process according to claim 10, characterized in that the air stripping process consists of the use of a first open, warm and humid air flow, and a second closed air flow.

12. A process according to one of the claims 8-11, characterized in that the manure is transported to a collecting unit, that the collected manure as liquid manure is fed through a stripper/absorber for the removal of ammonia and phosphates while lime or lye is added, whereby via a first pipe water and lime compounds are transported to a thickener and via a second pipe an ammonia salt solution is transported to a storage tank and that, in the thickener, the water is separated from the lime compounds and is subsequently removed.

13. A process according to claim 12, characterized in that the water from the thickener is spread over a plot of land.

14. A process according to claim 12 or 13, characterized in that the thickener contains an overflow device.

15. A process according to one of the claims 13 or 14, characterized in that the sediment from the thickener is further concentrated in a separator.

16. A process according to claim 14 and 15, characterized in that the liquid that comes free by further thickening, will be supplied to an overflow basin.

17. A process according to one of the foregoing claims, characterized in that the ammonium salt solution is supplied to a dryer, and after drying is processed into a dry fertiliser.

18. A process according to one of the preceding claims 11-18, characterized in that the lime compounds are supplied to a dryer, and after drying are prepared to form a dry fertiliser.

19. A process according to one of the claims 11-18, characterized in that the watery fraction leaving the stripper/absorber and/or the thickener will be supplied to a liquid/air heat exchanger.

20. A process according to one of the claims 11-19, characterized in that the warm air flow, after having been in contact with the manure, is stripped from its ammonia in a contacting unit, and is supplied to a biofilter.

21. An apparatus for treatment of manure, in particular liquid manure, characterized by a stripper/ absorber to which the manure can be supplied and where, with the addition of lime, ammonia and phosphate can be removed from the manure, the stripper/absorber containing a first contacting unit, for bringing the liquid manure into contact with a flow of warm air to strip carbondioxide and part of the ammonium from the manure.

22. An apparatus according to claim 21, characterized by a second contacting unit where the carbondioxide and ammonia containing air flow can be brought into contact with an acid containing air flow for the removal of ammonia from the airflow and the conversion of the ammonia into an ammonium salt.

23. An apparatus according to claim 22, characterized by a biofilter to which the air from the second contacting unit is supplied.

24. An apparatus according to one of the claims 21-23, characterized by a heating unit for heating of the liquid flow from the first contacting unit.

25. An apparatus according to one of the claims 21-24, characterized by a lime supply unit for the supply of lime to the liquid flow from the first contacting unit.

26. An apparatus according to one of the claims 21-25, characterized by a third contacting unit where the lime containing liquid flow can be brought into contact with a closed airflow, that removes ammonia from the liquid flow.

27. An apparatus according to claim 26, characterized in that the closed airflow through a fourth contacting unit where an acid containing water flow can remove the ammonia from the closed airflow by converting the ammonia into an ammonia salt.

28. An apparatus according to one of the claims 21-27, characterized by a fifth contacting unit in form of a heat exchanger where the liquid flow from the third contacting unit exchanges heat to an airflow, to form an outgoing warm, humid airflow.

29. An apparatus according to one of the claims 21-28, characterized by a separation unit for the removal of solid material from the liquid flow free of ammonia.

30. An apparatus according to claim 29, characterized in that the separation unit contains a settling tank.

31. An apparatus according to claim 29 or 30, characterized in that the separation unit contains a decanter.

32. An apparatus according to one of the claims 29-31, characterized in that the separation unit contains a supplying device for a poly-electrolite.

33. An apparatus according to one of the claims 30-33, characterized in that the settler contains an overflow basin.

34. An apparatus according to one of the claims 21-34, characterized by a dryer to dry the ammonia salt.

35. An apparatus according to one of the claims 31-35, characterized by a dryer to dry the lime sludge.

36. An apparatus according to one of the claims 29-36, characterized in that there is a separator between the lime supply unit and the third contacting unit.

37. An apparatus according to one of the claims 29-36, characterized in that there is a separator after the third contacting unit.

38. An apparatus according to one of the claims 29-36, characterized in that there is a separator after the fifth contacting unit.

FIG.1

EP 0 351 922 A1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 576 741 (CESKOSLOVENSKA AKADEMIE VED) * Page 1, line 1 - page 2, line 15; page 3, line 11 - page 4, line 10; page 5, line 6 - page 6, line 29; page 11, example 1; page 16, claim 7 * | 1-3,8,9 ,12,13, 17,18, 32 | A 01 C   3/02 C 02 F   1/58 C 05 F   3/00 |
| D,A | WO-A-8 501 671 (J. DRESE) * Front-page, abstract * | 8,10,11 ,19-28 | |
| A | DE-A-3 635 843 (BATTELLE-INSTITUT) * Column 1, claims 1,4 * | 20,23 | |

TECHNICAL FIELDS SEARCHED (Int. Cl.5)

C 02 F
A 01 C

The present search report has been drawn up for all claims

| Place of search | Date of completion of the search | Examiner |
|---|---|---|
| THE HAGUE | 16-10-1989 | TEPLY J. |

EPO FORM 1503 03.82 (P0401)